# EUROPEAN PATENT SPECIFICATION

(11) **EP 3 109 977 B1**
(45) Date of publication and mention of the grant of the patent: **01.05.2019**
(21) Application number: 16172145.1
(22) Date of filing: 31.05.2016
(51) Int. Cl.: H02K 5/20, H02K 9/19, H02K 5/18

(54) **ROTATING ELECTRICAL MACHINE AND COOLING SYSTEM OF ROTATING ELECTRICAL MACHINE**
ELEKTRISCHE DREHMASCHINE UND KÜHLSYSTEM FÜR ELEKTRISCHE DREHMASCHINE
MACHINE ÉLECTRIQUE ROTATIVE ET SYSTÈME DE REFROIDISSEMENT POUR MACHINE ÉLECTRIQUE ROTATIVE

(30) Priority: 25.06.2015 JP 2015127263
(43) Date of publication of application: 28.12.2016
(73) Proprietor: Hitachi, Ltd., Tokyo 100-8280 (JP)
(72) Inventor: IMURA, Makoto, Tokyo, 100-8280 (JP); NAKA, Yasuhiro, Tokyo, 100-8280 (JP); SUGIMOTO, Shinji, Tokyo, 100-8280 (JP); KORI, Daisuke, Tokyo, 100-8280 (JP)
(74) Representative: MERH-IP Matias Erny Reichl Hoffmann Patentanwälte PartG mbB

(56) References cited:
- EP-A2- 2 568 580
- WO-A1-2014/094082
- WO-A1-2015/008390
- GB-A- 874 748
- US-A- 4 854 373
- US-A- 5 906 236
- US-A1- 2011 148 229
- US-B1- 6 909 210

## Description

### BACKGROUND OF THE INVENTION

### FIELD OF THE INVENTION

The present invention relates to a rotating electrical machine including a stator and a rotor, and particularly to a rotating electrical machine cooled by using a refrigerant and a cooling system of a rotating electrical machine.

### BACKGROUND ART

By efficiently cooling a rotating electrical machine by using a liquid refrigerant, it is possible to suppress an increase in size of the rotating electrical machine, and to increase the power output of the rotating electrical machine. As the related art for cooling the rotating electrical machine, technologies described in JP-A-2003-199291 and JP-A-2010-206993 have been known.

In the technologies described in JP-A-2003-199291 and JP-A-2010-206993, the rotating electrical machine is cooled by circulating the liquid refrigerant in a cooling frame attached to the rotating electrical machine. GB 874 748 A relates to the cooling of electric motors and more particularly to the cooling of electric motors in mining machines in which a water jacket is applied to the outside of the motor. US 5, 906, 236 relates to a heat exchange jacket for attachment to an external surface of a pump motor having a bottom surface with a shape conforming to a curvature of the housing of the pump motor and a top surface joined to the bottom surface so as to define a heat exchange chamber therebetween. US 2011/0148229 A1 relates to a cooling device which, in the lower region of the housing, has a sump pan that is situated or developed there for a coolant. Here, a housing in which a stator and a rotor are stored, and the cooling frame have an approximately cylindrical shape, and are coaxially disposed. The cooling frame is attached on an outer circumferential surface of the housing so as to cover the entirety of the outer
circumferential surface, and is integrated with the housing. The liquid refrigerant is circulated in a flow path formed of a clearance positioned between the cooling frame and the housing.

### SUMMARY OF THE INVENTION

In the related art, the total weight of the rotating electrical machine is increased by the amount of the weight of the cooling frame. In regard to this, general methods for reducing size and weight, such as using a light-weight material such as aluminum or carbon fiber for the constituent material of the cooling frame or the housing, or thinning the thickness of the cooling frame or the housing are known. However, in such methods for reducing size and weight, the strength of the cooling frame or the housing is decreased, and thus the cooling frame or the housing is greatly deformed by the load due to the vibration or an increase in temperature during the operation of the rotating electrical machine. Further, if an attachment leg for installing the rotating electrical machine to a pedestal is provided to the housing or the cooling frame, a heat load, which is caused by the difference between the expansion amount of the pedestal and the expansion amount of the rotating electrical machine due to the increase in temperature during the operation of the rotating electrical machine, is concentrated in a connection portion between the attachment leg and the housing or the cooling frame which is reduced in size and weight, and thus the connection strength is decreased.

The invention provides a rotating electrical machine which includes a cooling structure capable of obtaining a reduction in size and weight while securing the strength.

In order to solve the problem, according to the invention, there is provided a rotating electrical machine according to claim 1.

### BRIEF DESCRIPTION OF THE DRAWINGS

Fig. 1 is a sectional view in an axial direction of a rotating electrical machine as Example 1 of the invention.
Fig. 2 is a partial sectional view illustrating the vicinity of an end portion in the axial direction of the rotating electrical machine of Example 1.
Fig. 3 is a partial side view illustrating the external appearance of the vicinity of the end portion in the axial direction of the rotating electrical machine of Example 1.
Fig. 4A is a sectional view in a direction orthogonal to a rotary shaft of the rotating electrical machine of Example 1.
Fig. 4B is a sectional view in the direction orthogonal to the rotary shaft of the rotating electrical machine of Example 1.
Fig. 4C is a sectional view in the direction orthogonal to the rotary shaft of the rotating electrical machine of Example 1.
Fig. 5 is a sectional view in the direction orthogonal to the rotary shaft of a cooling frame of the rotating electrical machine of Example 1.
Fig. 6 is a partial external view of the cooling frame of the rotating electrical machine of Example 1.
Fig. 7A is a sectional view in a direction orthogonal to a rotary shaft of a rotating electrical machine as Example 4 of the invention.
Fig. 7B is a sectional view in the direction orthogonal to the rotary shaft of the rotating electrical machine as Example 4 of the invention.
Fig. 8A is a sectional view in a direction orthogonal to a rotary shaft of a rotating electrical machine as Example 5 of the invention.
Fig. 8B is a sectional view in the direction orthogonal to the rotary shaft of the rotating electrical machine as Example 5 of the invention.
Fig. 9 illustrates a configuration of a cooling system of a rotating electrical machine as Example 6 of the invention.
Fig. 10 illustrates a configuration of a cooling system of a rotating electrical machine as a modification example of Example 6.
Fig. 11 illustrates a configuration of a cooling system of a rotating electrical machine as another modification example of Example 6.

### DETAILED DESCRIPTION OF THE INVENTION

Hereinafter, examples of the invention will be described with reference to the drawings. In each drawing, constituent elements with the same reference numeral indicate the same constituent element or a constituent element having a similar function. The rotating electrical machine in each example is an induction motor, but the example can be applied to other motors such as a synchronous motor and the like.

### Example 1

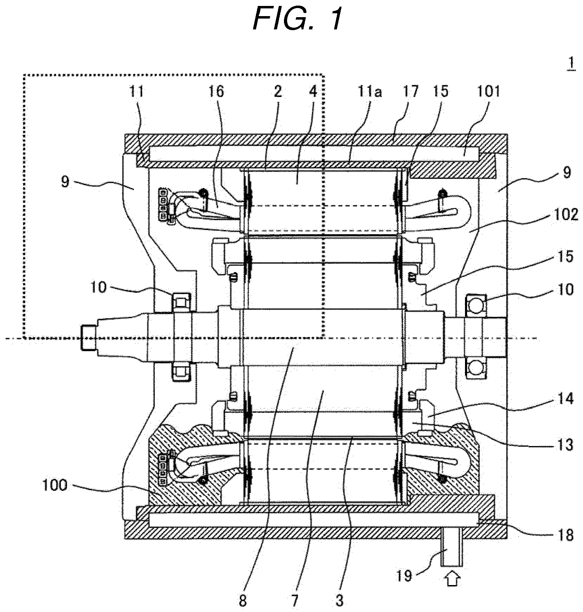

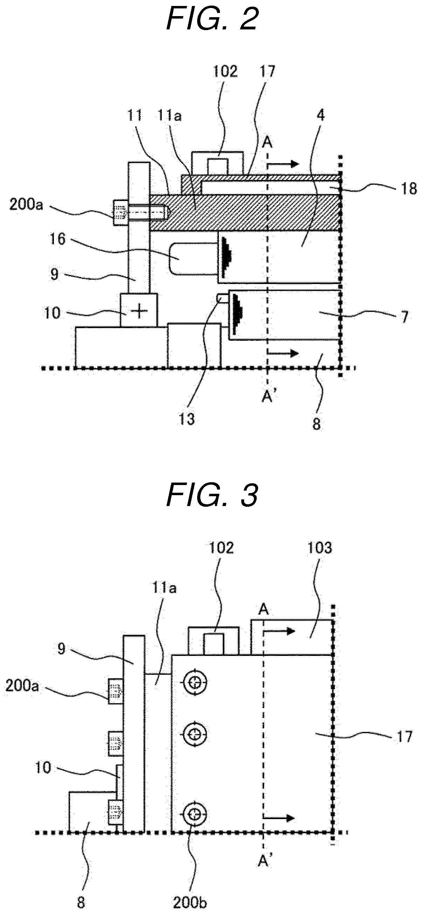

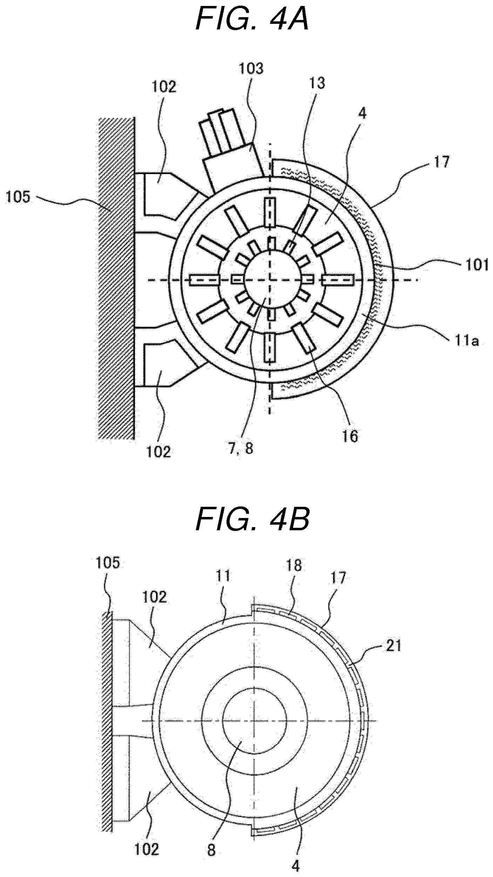

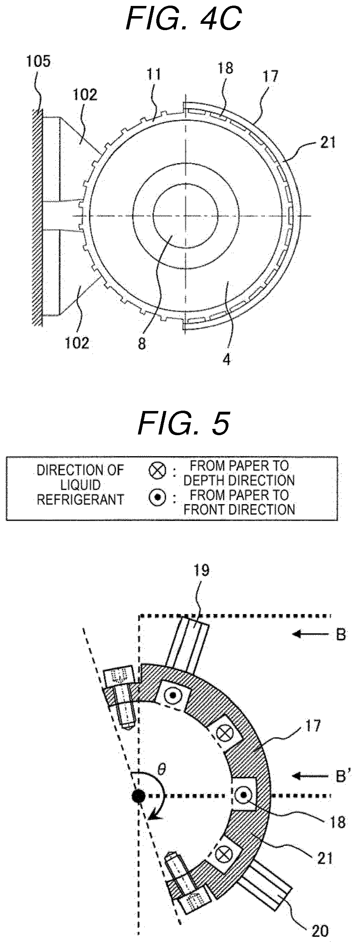

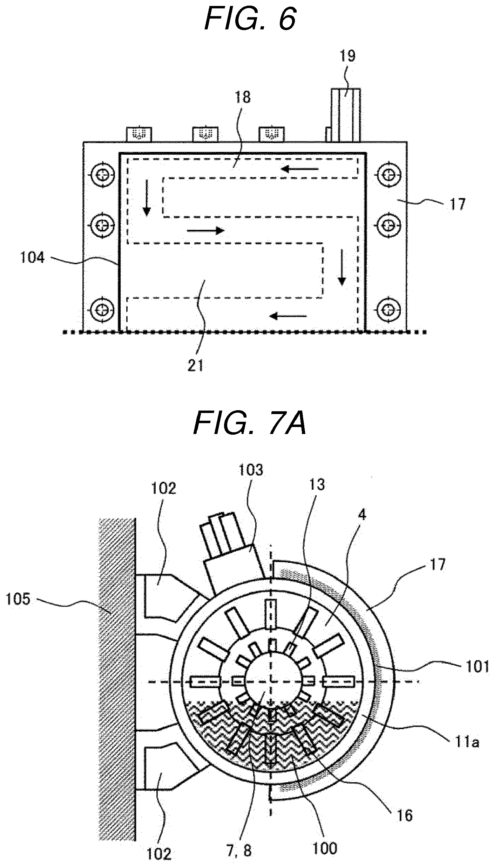

Example 1 of the invention will be described with reference to Figs. 1 to 6. Fig. 1 is a sectional view in an axial direction of a rotating electrical machine as Example 1 of the invention. Fig. 2 is a partial sectional view illustrating the vicinity of an end portion in the axial direction of the rotating electrical machine of Example 1. Fig. 3 is a partial side view illustrating the external appearance of the vicinity of the end portion in the axial direction of the rotating electrical machine of Example 1. Figs. 4A to 4C are sectional views in a direction orthogonal to a rotary shaft of the rotating electrical machine of Example 1. Further, Figs. 4A to 4C illustrate cross sections respectively taken along line A-A' in Fig. 2. Fig. 5 is a sectional view in the direction orthogonal to the rotary shaft of a cooling frame 17 of the rotating electrical machine of Example 1. Further, Fig. 5 illustrates a cross section taken along line A-A' in Fig. 3. Fig. 6 is a partial external view of the cooling frame 17 of the rotating electrical machine of Example 1. Further, Fig. 6 is a view which is seen from a direction of B-B' indicated by arrows in Fig. 5.

A rotating electrical machine 1 illustrated in Fig. 1 includes a stator 2; a rotor 3 that is rotatably held in an inner circumference of the stator 2 and is disposed to face the stator 2 with a gap therebetween; and the cooling frame 17 that cools the rotating electrical machine 1 from the outer side of a housing 11 by circulating a liquid refrigerant 101. The stator 2 includes a stator core 4, and a stator winding that is wound around the stator core 4, and the stator core 4 includes a plurality of teeth cores protruding in a radial direction from an annular yoke core, and slots that are present between the teeth cores and accommodate the stator winding. The rotor 3 includes a shaft 8 that is rotatably held by a bearing 10, and a rotor core 7 fixed to the shaft 8. The rotor core 7 includes a plurality of teeth cores protruding in a radial direction from an annular yoke core, and a plurality of slots that are present between the teeth cores and accommodate a plurality of conductor bars 13. The plurality of conductor bars 13 are electrically connected by an annular end ring 14.

The stator core 4 and the rotor core 7 are configured of a plurality of magnetic steel plates (for example, silicon sheets) stacked in a rotary shaft direction, and are supported by a pressing plate 15 at an end portion in the rotary shaft direction.

The stator 2 having an approximately cylindrical shape is accommodated in an inner circumferential surface of the housing 11 having an approximately cylindrical shape (refer to Figs. 4A and 4B). An end bracket 9 to which the bearing 10 is attached is fixed to each of openings at opposite ends of the housing 11. Here, as illustrated in Fig. 2, the end bracket 9 is fixed to the housing 11 by using a bolt 200a to be inserted into the end bracket 9 and a screw hole provided on an end surface of the housing 11. The rotor 3 is rotatably shaft-supported by the bearing 10 and the end bracket 9 by using the bearing 10 as a bearing of the shaft 8.

The cooling frame 17 having an approximate semi-circular shape or an approximate semi-cylindrical shape as described below is fixed to the housing 11 so as to partially (in this example, half-circumference) cover an outer circumferential surface of a main body portion 11a of the housing 11 having an approximately cylindrical shape. Here, as illustrated in Fig. 3, the cooling frame 17 is fixed to the housing 11 by using a bolt 200b inserted from the outer circumferential side surface of the cooling frame 17 and a screw hole provided on the outer circumferential side surface of the housing 11. According to the shape such as a semi-circular shape or a semi-cylindrical shape and bolt fastening, the cooling frame 17 is detachably fixed to the housing 11. As illustrated in Figs. 2 and 3, in a state where the cooling frame 17 is attached to the housing 11, the end portion of the cooling frame 17 is separated from the end bracket 9. Accordingly, in a state where the cooling frame 17 is attached to the housing 11, the main body portion 11a of the housing 11 is present between the end portion of the cooling frame 17 and the end bracket 9, and thus the cooling frame 17 is not in contact with the end bracket 9. Thus, the cooling frame 17 can be easily detached from the housing 11 without interference with the end bracket 9.

In a state where the cooling frame 17 is attached to the housing 11, a clearance formed between the outer circumferential surface of the housing 11 and the inner circumferential surface of the cooling frame 17 is filled with the liquid refrigerant 101 for cooling the rotating electrical machine 1. The liquid refrigerant 101 is circulated in a flow path 18 formed of the clearance. The cooling frame 17 is provided with an inlet 19 (Figs. 1, 5, and 6) for allowing the liquid refrigerant 101 to flow into the flow path 18 from the outside, and an outlet 20 (Fig. 5) for allowing the liquid refrigerant 101 flowing in the flow path 18 to flow out to the outside.

As illustrated in Figs. 4A to 4C, the rotating electrical machine 1 of Example 1 is installed to a pedestal 105 that is separately provided from the rotating electrical machine 1, and rotates a load. A plurality of attachment legs 102 for fixing the rotating electrical machine 1 to the pedestal 105 are provided on the outer circumferential surface of the main body portion 11a of the housing 11. In addition, in Figs. 4A to 4C, the rotating electrical machine 1 is installed to a vertical plane of the pedestal 105. Such an installation method is used in, for example, electric railway vehicles.

As illustrated in Figs. 4A to 4C, the cooling frame 17 having an approximate semi-circular shape or an approximate semi-cylindrical shape is attached to the outer circumferential surface of the housing 11 at a location where the cooling frame 17 does not interfere with a connection portion between the attachment legs 102 and the housing 11, and a power supply cable terminal block 103 by avoiding the connection portion and the power supply cable terminal block 103. In Example 1, the attachment legs 102 and the power supply cable terminal block 103 are provided on a half-circumference of the outer circumferential surface of the housing 11, and the cooling frame 17 is provided on the other half-circumference of the outer circumferential surface of the housing 11. The cross section of the cooling frame 17 is an arc shape having a central angle, which has a rotational center of the rotating electrical machine 1 as a center, of 180 degrees or less, and in this example, is a semi-arc shape having a central angle of approximately 180 degrees . In this manner, the cooling frame 17 is detachably fixed to the housing 11. Further, the cooling frame 17 can be easily detached from the housing 11 without interference with the attachment legs 102 or the power supply cable terminal block 103.

The power supply cable terminal block 103 is fixed to the outer circumferential surface of the housing 11 and is electrically connected to the stator winding in the housing 11. Further, the power supply cable terminal block 103 is used for connecting the rotating electrical machine 1 to an external power supply.

As illustrated in Figs. 4A to 4C, by setting the cooling frame 17 to have an approximate semi-circular shape or an approximate semi-cylindrical shape, it is possible to significantly reduce the weight of the cooling frame 17. That is, it is possible to reduce the size and weight of the cooling frame 17 without using general methods such as using a light-weight material for the constituent material of the cooling frame or the housing, or thinning the thickness of the cooling frame or the housing. Accordingly, it is possible to obtain a cooling structure capable of obtaining a reduction in size and weight while securing the strength.

In addition, according to Example 1, since the size of the cooling frame 17 can be reduced, the length of the flow path 18 of the liquid refrigerant 101, or the pressure loss in the flow path 18 during the circulation of the liquid refrigerant can be reduced. Therefore, it is possible to reduce the pump capacity for circulating the liquid refrigerant 101. Thus, it is possible to reduce an installation space and costs of a rotating electrical machine system that is provided with the rotating electrical machine and a cooling device.

As described above, the clearance between the cooling frame 17 and the housing 11 becomes the flow path 18 of the liquid refrigerant 101, and such a clearance is formed by forming a groove on the inner circumferential surface of the cooling frame 17 or the outer circumferential surface of the housing 11. In Example 1, since the cooling frame 17 has a semi-circular shape or a semi-cylindrical shape, it is easy to perform grooving on the inner circumferential surface of the cooling frame 17. Fig. 4B illustrates an example of a cooling structure in which grooves are formed on the inner circumferential surface of the cooling frame 17, and Fig. 4C illustrates an example of a cooling structure in which grooves are formed on the outer circumferential surface of the housing. In addition, grooves may be formed on both of the cooling frame 17 and the housing 11.

As described above, the cross section of the cooling frame 17 is an arc shape having a central angle, which has the rotational center of the rotating electrical machine 1 as a center, of 180 degrees or less as illustrated in Fig. 5. That is, the cooling frame 17 is preferable as long as the shape thereof is a semi-cylindrical shape having a central angle of 180 degrees, or a partially cylindrical shape having a central angle smaller than that of the semi-cylindrical shape. As illustrated in Fig. 5, the cooling frame 17 of Example 1 has a semi-cylindrical shape in which the cross section including a bolt fastening portion is an arc shape having a central angle θ of approximately 180 degrees . In doing so, the cooling frame 17 can be detachably fixed to the housing 11, and can be easily detached from the housing 11 without interference with the attachment legs 102 or the power supply cable terminal block 103. Further, in a state where bolt fastening is released, the cooling frame 17 can be attached or detached while being moved in an axial direction, a radial direction, and a circumferential direction of the rotating electrical machine 1. Therefore, assembly work or maintenance work of the cooling frame 17 becomes easy, and thus workability is improved. In addition, since the cooling frame 17 does not interfere with the end bracket 9, the degree of freedom of an assembly method for the cooling frame 17, the housing 11, and the end bracket 9 is increased. Further, it is possible to attach the cooling frame 17 to an arbitrary position by appropriately providing a screw hole.

As illustrated in Fig. 6, in order to uniformly perform cooling along a longitudinal direction of the stator 2, the flow path 18 is formed on the inner circumferential surface of the cooling frame 17 so that the liquid refrigerant is circulated in a direction parallel to an axial line of the rotary shaft (in Fig. 6, direction of rightward and leftward arrows) . Here, it is preferable that the length in the axial direction of the flow path 18 is formed to be longer than the length in the axial direction of the stator 2. In doing so, heat from the stator 2 of which the temperature is increased is sufficiently transferred to the liquid refrigerant 101.

The direction of the flow path 18 is not limited to the above-described direction, and the flow path 18 may be formed so that the liquid refrigerant 101 is circulated in the circumferential direction of the rotation seen from the rotary shaft direction (in Fig. 6, direction of upward and downward arrows) . As illustrated in Fig. 6, it is preferable that the flow path 18 is formed such that the liquid refrigerant 101 is circulated over the approximately entire region of the inner circumferential surface of the cooling frame 17 except edge portions thereof that include the bolt fastening portion and a portion where an O-ring is mounted (O-ring groove 104) by using both the flow path in a direction parallel to the axial line of the rotary shaft and the flow path in the circumferential direction of the rotation. In doing so, since the region through which the liquid refrigerant 101 is circulated covers the region of the stator 2 over the length thereof in the axial direction, cooling efficiency is improved.

In Example 1, if the stator 2 for the region which is covered by the cooling frame 17 is cooled, a thermal gradient is formed within the stator 2 in the radial direction, the circumferential direction, and the axial direction inside. If the thermal gradient is formed, heat conduction is promoted. Therefore, even if the stator 2 can be partially cooled, cooling efficiency for causing the high power output of the rotating electrical machine 1 can be obtained. Specifically, as in Example 1, if a cooling frame having a semi-circular shape or a semi-cylindrical shape is used, cooling efficiency is more reliably obtained.

As illustrated in Fig. 6, the O-ring groove 104 on which an O-ring for sealing the liquid refrigerant 101 is mounted, is provided along the outer circumferential edge portion of the inner circumferential surface of the cooling frame 17. That is, the O-ring groove 104 is formed to be a cylindrical seat along the circumferential direction of the housing 11 and to be a raised face along a direction parallel to the rotary shaft in the cooling frame 17.

The cooling frame 17 is fixed to the housing 11 by bolt fastening at a plurality of locations. A plurality of screw holes are provided on the housing 11 at positions facing the outer circumference of the O-ring groove 104. The screw hole is formed to have a depth for not penetrating the main body portion 11a of the housing 11. In this manner, the liquid refrigerant 101 inside the cooling frame 17 is prevented from leaking to the inside of the housing 11 through the screw hole. It is preferable that, in a state where the bolt fastening is made, the bolts are disposed such that the axial direction of each bolt coincides with the radial direction of the rotating electrical machine 1. In doing so, inertial force or a heat load is almost uniformly divided into each bolt. Further, a shearing load or bending moment acting in a direction other than the axial direction of the bolt is suppressed, and sealing properties of the liquid refrigerant 101 are improved.

By allowing the power supply cable terminal block to protrude through a notch portion or an opening provided to a part of the cooling frame 17, it is possible to provide a power supply cable within a region where the cooling frame 17 is attached. In regard to this, in Example 1, the region where the cooling frame 17 is attached, and the region where the power supply cable is provided are independent from each other, and the cooling frame 17 has a general semi-circular shape or a general semi-cylindrical shape with no notch portion or opening. Therefore, the reliability of sealing for the liquid refrigerant 101 is improved.

### Example 2

Next, a rotating electrical machine as Example 2 of the invention will be described. The configuration itself of Example 2 is the same as that of Example 1.

In Example 2, the cooling frame 17 having a semi-circular shape or a semi-cylindrical shape in Example 1 is attached to the housing 11 at a location where the temperature in a non-cooling state is highest in the circumferential direction of the stator 2 and the rotor 3. Accordingly, the attaching position of the cooling frame 17 in Example 2 can be obtained by shifting the cooling frame 17 from the position in Example 1 in the circumferential direction. In this manner, in the circumferential direction of the rotating electrical machine 1, the peak temperature is decreased and the temperature distribution becomes uniform. Accordingly, unevenness of the temperature may not be considered for the setting of the size or the strength of the cooling frame 17, and thus the size and the weight of the cooling frame 17 can be reduced.

Example 2 can be applied to a case where unevenness of the temperature is caused due to the operating form or the operating environment of the rotating electrical machine 1 as well as a case where unevenness of the temperature is caused due to the structure of the rotating electrical machine. As the representative case, the rotating electrical machine is used as a driving source of a moving object such as motor vehicles or railway vehicles. In this case, the cooling effect due to counter-wind becomes uneven by the way that counter-wind bumps against the rotating electrical machine during the traveling, and thus unevenness of the temperature is caused. For example, in a case where counter-wind bumps against a portion of the outer surface of the main body portion 11a of the housing 11, the portion is cooled due to convective heat transfer. Meanwhile, the temperature of a location where counter-wind does not bump, becomes higher than that of the location where counter-wind bumps. In regard to this, according to Example 2, the temperature distribution of the rotating electrical machine 1 can become uniform by attaching the cooling frame 17 having a semi-circular shape or a semi-cylindrical shape to a location where counter-wind does not bump.

In the rotating electrical machine 1 illustrated in Fig. 4C, the flow path 18 and a flow path wall 21 for circulating the liquid refrigerant 101 are formed on the approximately entire surface of the outer circumferential surface of the housing 11, and thus the rotating electrical machine 1 illustrated in Fig. 4C can substantially function as Example 2.

### Example 3

Next, a rotating electrical machine as Example 3 of the invention will be described. The configuration itself of Example 3 is the same as that of Example 1.

The rotating electrical machine 1 according to Example 3 is used as an air cooling type rotating electrical machine without the cooling frame 17, by using the fact that the cooling frame 17 can be attached or detached without interference with other portions of the rotating electrical machine. In this case, since the attachment legs 102 are provided to the housing 11, the rotating electrical machine according to Example 3 can be installed in the same manner as a case in which cooling is performed by a liquid cooling type rotating electrical machine, by attaching the cooling frame 17 thereto without using other members.

According to Example 3, a rotating electrical machine capable of being easily applied to both of a liquid cooling type and an air cooling type can be implemented. In addition, if the specifications except the cooling type are the same as each other, regarding the liquid cooling type rotating electrical machine and the air cooling type rotating electrical machine, communization for components such as the housing 11, the cooling frame 17, and the attachment legs 102 can be obtained. Therefore, productivity is improved and costs are reduced.

In a case where the rotating electrical machine 1 illustrated in Fig. 4C functions as Example 3, the flow path 18 and the flow path wall 21 for the liquid refrigerant 101, which are provided on the approximately entire surface of the outer circumferential surface of the housing 11, act as radiation fins. Therefore, cooling efficiency is improved. Specifically, in a case where air cooling is performed by counter-wind as in motor vehicles or railway vehicles, the cooling effect becomes great.

### Example 4

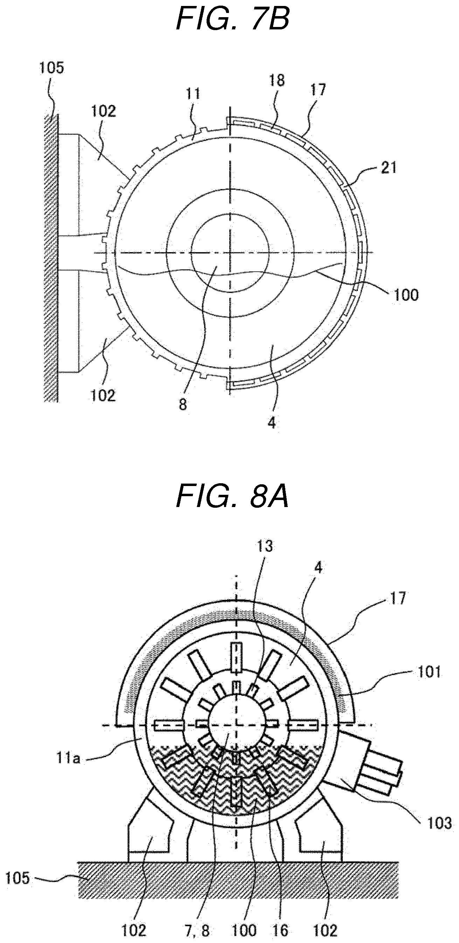

Example 4 of the invention will be described with reference to Figs. 7A and 7B.

Figs. 7A and 7B are sectional views in a direction orthogonal to a rotary shaft of a rotating electrical machine as Example 4 of the invention. The configuration itself of Example 4 is the same as that of Example 1. Hereinafter, the difference from Example 1 is mainly described.

In Example 4, the housing 11, that is, the rotating electrical machine 1 is filled with, and stores a liquid refrigerant 100 which is different from the liquid refrigerant 101 circulating in the cooling frame 17. In Example 4, the housing is filled with the liquid refrigerant 100 with an amount of the liquid level of the liquid refrigerant 100 to be positioned below the rotation center in a state where the rotor is stopped. However, the amount of the liquid refrigerant 100 is not limited thereto and can be appropriately set. In addition, the liquid refrigerant 100 and the liquid refrigerant 101 may be the same kind or the different kind. For example, the liquid refrigerant 100 may be oil and the liquid refrigerant 101 may be water, or both the liquid refrigerant 100 and the liquid refrigerant 101 may be oil.

The liquid refrigerant 100 in the rotating electrical machine 1 cools the stator 2 and the rotor 3 immersed in the liquid refrigerant 100. In addition, if the rotor 3 is rotated, the liquid refrigerant 100 is scooped up by the conductor bar 13 and the end ring 14 of the rotor 3, in the rotating electrical machine 1. In doing so, a coil end 16 and the stator core 4 which are not immersed in the liquid refrigerant 100, are cooled by being showered with the liquid refrigerant which is scooped up. Further, the liquid refrigerant 100 stored in the rotating electrical machine 1 is cooled by the heat absorption of the liquid refrigerant 101 flowing in the cooling frame 17.

As described above, by the stirring of the liquid refrigerant 100 in the rotating electrical machine 1, all locations of the stator 2 and the rotor 3 in the circumferential direction are showered with the liquid refrigerant 100, and the heat thereof is absorbed by the liquid refrigerant 100 with which the locations are showered. Heat exchange is performed between the liquid refrigerant 100 in the rotating electrical machine 1 and the liquid refrigerant 101 in the cooling frame 17. Therefore, the temperature in the circumferential direction in the rotating electrical machine 1 becomes uniform and the cooling performance in the entirety of the rotating electrical machine 1 is improved.

Here, as illustrated in Fig. 7B, radiation fins may be formed on the surface on the half-circumference, which is exposed without being covered by the cooling frame 17, of the outer circumferential surface of the housing 11. In addition, similar to Fig. 4C, the flow path 18 and the flow path wall 21 provided on the surface of the housing 11 may be used as radiation fins. According to this configuration, the liquid refrigerant 100 is also cooled by the heat exchange between the air coming into contact with the radiation fins and the liquid refrigerant 100 in the rotating electrical machine 1. Therefore, the cooling performance in the entirety of the rotating electrical machine 1 is improved.

### Example 5

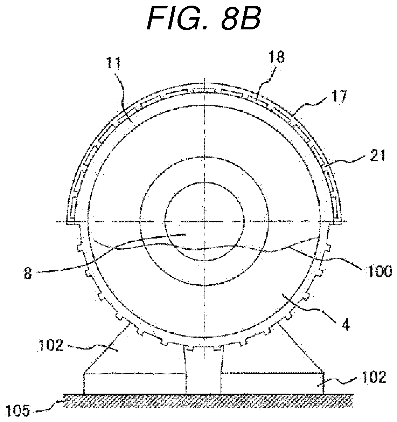

Example 5 will be described with reference to Figs. 8A and 8B.

Figs. 8A and 8B are sectional views in a direction orthogonal to a rotary shaft of a rotating electrical machine as Example 5 of the invention. The configuration itself of Example 5 is the same as that of Example 1. In addition, in Example 5, the housing 11, that is, the rotating electrical machine 1 is filled with the liquid refrigerant 100 similar to Example 4. Hereinafter, the difference from Example 1 and Example 4 is mainly described.

The rotating electrical machine 1 of Example 5 is installed on a horizontal plane of the pedestal 105. As illustrated in Figs. 8A and 8B, the cooling frame 17 having a semi-circular shape or a semi-cylindrical shape is disposed on the outer circumferential surface of the main body portion 11a of the housing 11 at a position adjacent to a portion which is not immersed in the liquid refrigerant 100 in the housing 11. In doing so, in the rotating electrical machine 1, the portion immersed in the liquid refrigerant 100 is cooled by the liquid refrigerant 100, and the portion which is not immersed in the liquid refrigerant 100 is cooled by the liquid refrigerant 101. Further, the liquid refrigerant 100 is cooled by the heat exchange between the air coming into contact with the outer surface of the housing 11, which is exposed to the outside, and the liquid refrigerant 100.

According to Example 5, the temperature in the circumferential direction in the rotating electrical machine 1 becomes uniform and the cooling performance in the entirety of the rotating electrical machine 1 is improved.

Here, as illustrated in Fig. 8B, radiation fins may be formed on the surface on the half-circumference, which is exposed without being covered by the cooling frame 17, of the outer circumferential surface of the housing 11. That is, the radiation fins may be provided on the outer circumferential surface of the main body portion 11a of the housing 11 at a position adjacent to a portion which is immersed in the liquid refrigerant 100 in the housing 11. In addition, similar to Fig. 4C, the flow path 18 and the flow path wall 21 provided on the surface of the housing 11 may be used as radiation fins. According to this configuration, since the liquid refrigerant 100 can be efficiently cooled by the radiation fins, the cooling performance in the entirety of the rotating electrical machine 1 is improved.

### Example 6

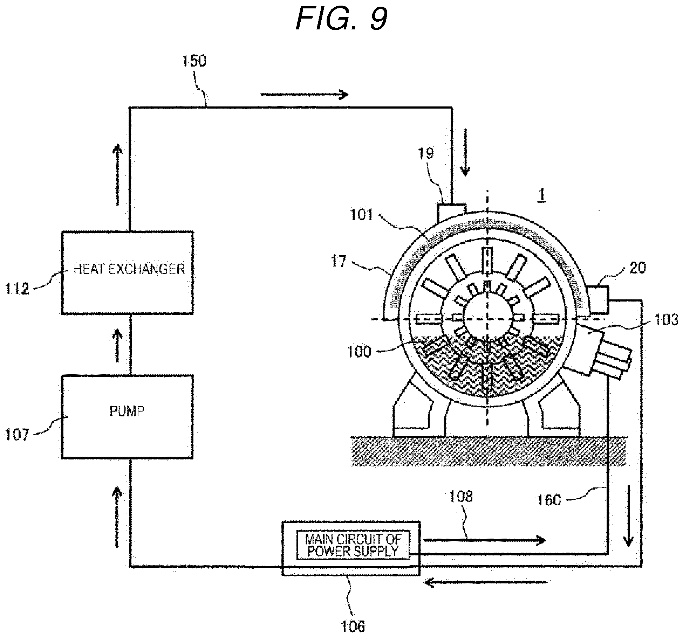

Example 6 of the invention and a modification example thereof will be described with reference to Figs. 9 to 11. In the drawings, the arrows with no reference numerals indicate the direction of the flow of the liquid refrigerant 100 or the liquid refrigerant 101.

Fig. 9 illustrates a configuration of a cooling system of a rotating electrical machine as Example 6 of the invention. The cooling system includes the rotating electrical machine 1 and the cooling device thereof; however, the rotating electrical machine 1 of Example 5 is applied to Example 6. The rotating electrical machine according to other examples may be applied thereto (the same is applied to the modification example described below).

As illustrated in Fig. 9, in the cooling device of Example 6, the liquid refrigerant 101 flowing in the cooling frame 17 flows out through the outlet 20 of the cooling frame 17 and flows in a pipe 150 to reach a pump 107. The liquid refrigerant 101 that has reached the pump 107 flows in the pipe 150 to reach a heat exchanger 112. The liquid refrigerant 101 that has reached the heat exchanger 112 is cooled by the heat exchanger 112 and then flows in the pipe 150 to reach the inlet 19 of the cooling frame 17. The liquid refrigerant 101 that has reached the inlet 19 flows into the cooling frame 17 through the inlet 19, and then flows in the cooling frame 17 to flow out through the outlet 20. That is, the liquid refrigerant 101 is driven to be circulated between the cooling frame 17 and the heat exchanger 112 by the pump. In this manner, by circulating the liquid refrigerant 101 in a heat exchange cycle in the cooling device of Example 6, the rotating electrical machine 1 is cooled with high efficiency.

In Example 6, by connecting the power supply cable terminal block 103 to a power supply 106 by using a power cable 160, three-phase alternating-current power 108 is supplied from a main circuit of the power supply 106 to the rotating electrical machine 1. The power supply 106 is a part of passage through which the liquid refrigerant 101 passes. For example, the liquid refrigerant 101 passes through a cooling fin of the main circuit. Accordingly, the power supply 106 is also cooled by the liquid refrigerant 101 with high efficiency.

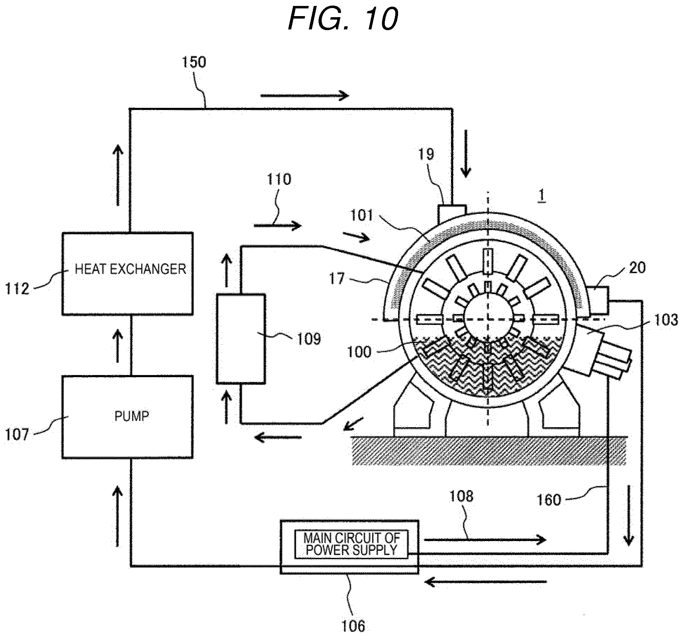

Fig. 10 illustrates a configuration of a cooling system of a rotating electrical machine as a modification example of Example 6. Hereinafter, the difference from Example 6 is described.

In the modification example illustrated in Fig. 10, the liquid refrigerant 100 stored in the housing of the rotating electrical machine 1 is pumped out to the outside of the rotating electrical machine 1 by a pump 109. The liquid refrigerant 100 that is pumped out, is driven to be fed to the rotating electrical machine 1 by the pump 109 and is discharged into the housing through a discharging port provided to the housing. The discharging port is provided on a side where the stator 2 and the rotor 3 are not immersed in the liquid refrigerant 100. In doing so, the portion where the stator 2 and the rotor 3 are not immersed in the liquid refrigerant 100 is showered with the discharged liquid refrigerant 100 to be cooled. Accordingly, similar to Example 5, temperature in the circumferential direction in the rotating electrical machine 1 becomes uniform and the cooling performance in the entirety of the rotating electrical machine 1 is improved.

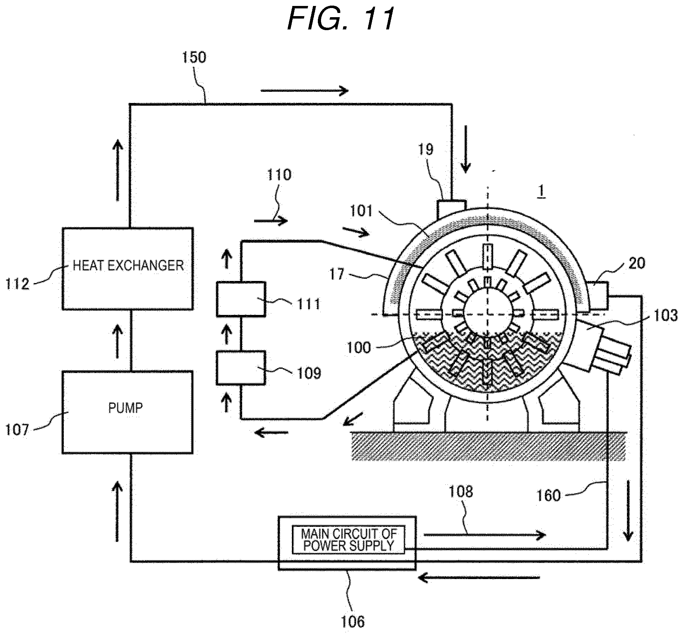

Fig. 11 illustrates a configuration of a cooling system of a rotating electrical machine as another modification example of Example 6. Hereinafter, the difference from Example 6 is described.

In the modification example in Fig. 11, in addition to the configuration of the modification example illustrated in Fig. 10, the liquid refrigerant 100, which is pumped out to the outside of the rotating electrical machine 1 by the pump 109, passes through a heat exchanger 111 and then is discharged into the rotating electrical machine 1. In doing so, the liquid refrigerant 100 is discharged into the rotating electrical machine 1 after being cooled by the heat exchanger 111. Accordingly, the temperature in the circumferential direction in the rotating electrical machine 1 becomes uniform and the effect of reducing the temperature in the rotating electrical machine 1 is improved.

The invention is not limited to the examples described above, and includes various modification examples. For example, the examples described above are described in detail in order to easily understand the invention, and the invention is not limited to an example essentially including all the configurations described above. In addition, addition, deletion, and replacement of other configurations can be made to a part of the configuration of each example.

For example, a plurality of cooling frames 17 may be provided. In addition, the cooling structure of the rotating electrical machine 1 in each example is not limited to a motor, and may be applied to a generator.

## Claims

1. A rotating electrical machine (1) comprising:
a housing (11) having an approximately cylindrical shape;
a stator (2) and a rotor (3) which are accommodated in the housing (11); and
a cooling frame (17) which is provided on an outer circumferential surface of the housing (11) and in which a first liquid refrigerant (101) is circulated,
wherein the cooling frame (17) has a partially cylindrical shape,
a flow path (18) of the first liquid refrigerant (101) is formed in a clearance between the cooling frame (17) and the housing (11), and
a sealing member (104) for sealing the first liquid refrigerant (101),
**characterized in that**,
the cooling frame (17) is capable of being attached to an arbitrary position of the outer circumferential surface of the housing (11) by bolt fastening at a plurality of locations.

2. The rotating electrical machine (1) according to claim 1,
wherein a cross section of the cooling frame (17) is an arc shape having a central angle (θ), which has a rotational center as a center, of 180 degrees or less.

3. The rotating electrical machine (1) according to claim 2,
wherein the cooling frame (17) has the central angle (θ) of approximately 180 degrees and has a semi-circular shape or a semi-cylindrical shape.

4. The rotating electrical machine (1) according to claim 1 or 2,
wherein the cooling frame (17) is detachably fixed to the outer circumferential surface of the housing (11).

5. The rotating electrical machine (1) according to claim 1,
wherein the clearance is formed by a groove portion provided on an inner circumferential surface of the cooling frame (17).

6. The rotating electrical machine (1) according to claim 1,
wherein the clearance is formed by a groove portion provided on the outer circumferential surface of the housing (11) .

7. The rotating electrical machine (1) according to claim 1,
wherein a radiation fin is provided on the outer circumferential surface of the housing (11) which is exposed to the outside.

8. The rotating electrical machine (1) according to claim 1,
wherein a flow path (18) of the first liquid refrigerant (101) and a flow path wall (21) are provided on an inner circumferential surface of the cooling frame (17), and a groove (104) for mounting an O-ring thereon is provided to an edge portion of the inner circumferential surface.

9. The rotating electrical machine (1) according to claim 1,
wherein the cooling frame (17) is attached to the outer circumferential surface of the housing (11) at a position where the temperature in a non-cooling state is highest.

10. The rotating electrical machine (1) according to claim 1,
wherein the rotating electrical machine (1) is capable of being used as an air cooling type rotating electrical machine by detaching the cooling frame (17).

11. The rotating electrical machine (1) according to claim 1,
wherein the inside of the housing (11) is filled with a second liquid refrigerant (100).

12. The rotating electrical machine (1) according to claim 11,
wherein a part of the rotor (3) is immersed in the second liquid refrigerant (100).

13. The rotating electrical machine (1) according to claim 11 or 12,
wherein the cooling frame (17) is attached to the outer circumferential surface of the housing (11) at a position adjacent to a portion which is not immersed in the second liquid refrigerant (100) inside the housing (11).

14. The rotating electrical machine (1) according to at least one of the claims 11 to 13,
wherein a radiation fin is provided to the outer circumferential surface of the housing (11) at a position adjacent to a portion which is immersed in the second liquid refrigerant (100) inside the housing (11).

15. A cooling system of a rotating electrical machine (1), comprising:
the rotating electrical machine (1) according to claim 1; and
a cooling device that cools the rotating electrical machine (1),
wherein the cooling device includes
a first heat exchanger (112) that cools the first liquid refrigerant (101), and
a pump (107) that drives the first liquid refrigerant (101) to circulate between the cooling frame (17) and the first heat exchanger (112).

16. The cooling system of a rotating electrical machine (1) according to claim 15,
wherein the inside of the housing (11) of the rotating electrical machine (1) is filled with a second liquid refrigerant (100) .

17. The cooling system of a rotating electrical machine (1) according to claim 16,
wherein the cooling device includes a pump (109) that pumps out the second liquid refrigerant (100) to the outside of the housing (11) and feeds the second refrigerant (100) that is pumped out, into the housing (11).

18. The cooling system of a rotating electrical machine (1) according to claim 17,
wherein the cooling device includes a second heat exchanger (111) that cools the second liquid refrigerant (100) on the outside of the housing (11).

## Patentansprüche

1. Rotierende Elektromaschine (1), die Folgendes umfasst:
ein Gehäuse (11), das eine ungefähr zylindrische Form besitzt;
einen Stator (2) und einen Rotor (3), die im Gehäuse (11) untergebracht sind; und
einen Kühlrahmen (17), der an einer Außenumfangsfläche des Gehäuses (11) vorgesehen ist und in dem ein erstes flüssiges Kältemittel (101) umgewälzt wird, wobei
der Kühlrahmen (17) eine teilweise zylindrische Form besitzt,
ein Strömungsweg (18) des ersten flüssigen Kältemittels (101) in einem Abstand zwischen dem Kühlrahmen (17) und dem Gehäuse (11) gebildet ist und
ein Dichtungselement (104) zum Abdichten des ersten flüssigen Kältemittels (101),
**dadurch gekennzeichnet, dass**
der Kühlrahmen (17) durch Verschrauben an mehreren Stellen an einer beliebigen Position der Außenumfangsfläche des Gehäuses (11) angebracht werden kann.

2. Rotierende Elektromaschine (1) nach Anspruch 1, wobei
ein Querschnitt des Kühlrahmens (17) eine Bogenform ist, die einen Mittelwinkel (θ), der ein Drehzentrum als ein Zentrum besitzt, von 180 Grad oder weniger besitzt.

3. Rotierende Elektromaschine (1) nach Anspruch 2, wobei
der Kühlrahmen (17) den Mittelwinkel (θ) von etwa 180 Grad besitzt und eine halbkreisförmige Form oder eine halbzylindrische Form besitzt.

4. Rotierende Elektromaschine (1) nach Anspruch 1 oder 2, wobei
der Kühlrahmen (17) an der Außenumfangsfläche des Gehäuses (11) abnehmbar befestigt ist.

5. Rotierende Elektromaschine (1) nach Anspruch 1, wobei
der Abstand durch einen Nutabschnitt, der an einer Innenumfangsfläche des Kühlrahmens (17) vorgesehen ist, gebildet ist.

6. Rotierende Elektromaschine (1) nach Anspruch 1, wobei
der Abstand durch einen Nutabschnitt, der an der Außenumfangsfläche des Gehäuses (11) vorgesehen ist, gebildet ist.

7. Rotierende Elektromaschine (1) nach Anspruch 1, wobei
eine Strahlungsrippe an der Außenumfangsfläche des Gehäuses (11), die nach außen freiliegt, vorgesehen ist.

8. Rotierende Elektromaschine (1) nach Anspruch 1, wobei
ein Strömungsweg (18) des ersten flüssigen Kältemittels (101) und eine Strömungswegwand (21) an einer Innenumfangsfläche des Kühlrahmens (17) vorgesehen sind und eine Nut (104) zum Anbringen eines O-Rings an einem Kantenabschnitt der Innenumfangsfläche vorgesehen ist.

9. Rotierende Elektromaschine (1) nach Anspruch 1, wobei
der Kühlrahmen (17) an der Außenumfangsfläche des Gehäuses (11) an einer Position, an der die Temperatur in einem Nicht-Kühlzustand am höchsten ist, angebracht ist.

10. Rotierende Elektromaschine (1) nach Anspruch 1, wobei
die rotierende Elektromaschine (1) durch Abnehmen des Kühlrahmens (17) als eine rotierende Elektromaschine des Luftkühlungstyps verwendet werden kann.

11. Rotierende Elektromaschine (1) nach Anspruch 1, wobei der Innenraum des Gehäuses (11) mit einem zweiten flüssigen Kältemittel (100) gefüllt ist.

12. Rotierende Elektromaschine (1) nach Anspruch 11, wobei
ein Teil des Rotors (3) in das zweite flüssige Kältemittel (100) eingetaucht ist.

13. Rotierende Elektromaschine (1) nach Anspruch 11 oder 12, wobei
der Kühlrahmen (17) an der Außenumfangsfläche des Gehäuses (11) an einer Position angebracht ist, die an einen Abschnitt angrenzt, der nicht in das zweite flüssige Kältemittel (100) im Gehäuse (11) eingetaucht ist.

14. Rotierende Elektromaschine (1) nach mindestens einem der Ansprüche 11 bis 13, wobei
eine Strahlungsrippe an der Außenumfangsfläche des Gehäuses (11) an einer Position vorgesehen ist, die an einen Abschnitt angrenzt, der in das zweite flüssige Kältemittel (100) im Gehäuse (11) eingetaucht ist.

15. Kühlsystem einer rotierenden Elektromaschine (1), das Folgendes umfasst:
die rotierende Elektromaschine (1) nach Anspruch 1; und
eine Kühleinrichtung, die die rotierende Elektromaschine (1) kühlt, wobei die Kühleinrichtung Folgendes enthält:
einen ersten Wärmetauscher (112), der das erste flüssige Kältemittel (101) kühlt, und
eine Pumpe (107), die das erste flüssige Kältemittel (101) vorantreibt, um es zwischen dem Kühlrahmen (17) und dem ersten Wärmetauscher (112) umzuwälzen.

16. Kühlsystem einer rotierenden Elektromaschine (1) nach Anspruch 15, wobei
der Innenraum des Gehäuses (11) der rotierenden Elektromaschine (1) mit einem zweiten flüssigen Kältemittel (100) gefüllt ist.

17. Kühlsystem einer rotierenden Elektromaschine (1) nach Anspruch 16, wobei
die Kühleinrichtung eine Pumpe (109), die das zweite flüssige Kältemittel (100) zur Außenseite des Gehäuses (11) abpumpt und das zweite Kältemittel (100), das abgepumpt worden ist, in das Gehäuse (11) einspeist, enthält.

18. Kühlsystem einer rotierenden Elektromaschine (1) nach Anspruch 17, wobei
die Kühleinrichtung einen zweiten Wärmetauscher (111) enthält, der das zweite flüssige Kältemittel (100) an der Außenseite des Gehäuses (11) kühlt.

## Revendications

1. Machine électrique rotative (1) comprenant :
un boîtier (11) ayant une forme approximativement cylindrique ;
un stator (2) et un rotor (3) qui sont logés dans le boîtier (11) ; et
un cadre de refroidissement (17) qui est prévu sur une surface circonférentielle extérieure du boîtier (11) et dans lequel un premier réfrigérant liquide (101) est mis en circulation,
dans laquelle le cadre de refroidissement (17) a une forme partiellement cylindrique,
un trajet d'écoulement (18) du premier réfrigérant liquide (101) est formé dans un intervalle entre le cadre de refroidissement (17) et le boîtier (11), et un élément d'étanchement (104) pour étancher le premier réfrigérant liquide (101),
**caractérisée en ce que**
le cadre de refroidissement (17) et capable d'être attaché à une position arbitraire de la surface circonférentielle extérieure du boîtier (11) par fixation au moyen de boulons à une pluralité d'emplacements.

2. Machine électrique rotative (2) selon la revendication 1,
dans laquelle une section transversale du cadre de refroidissement (17) est une forme en arc avec un angle au centre (θ), qui comporte un centre de rotation à titre de centre, de 180° ou moins.

3. Machine électrique rotative (1) selon la revendication 2,
dans laquelle le cadre de refroidissement (17) a un angle au centre (θ) d'approximativement 180° et présente une forme semi-circulaire ou une forme semi cylindrique.

4. Machine électrique rotative (1) selon la revendication 1 ou 2,
dans laquelle le cadre de refroidissement (17) est fixé de façon détachable sur la surface circonférentielle extérieure du boîtier (11).

5. Machine électrique rotative (1) selon la revendication 1,
dans laquelle l'intervalle est formé par une portion en forme de gorge prévue sur une surface circonférentielle intérieure du cadre de refroidissement (17).

6. Machine électrique rotative (1) selon la revendication 1,
dans laquelle l'intervalle est formé par une portion en forme de gorge prévue sur la surface circonférentielle extérieure du boîtier (11).

7. Machine électrique rotative (1) selon la revendication 1,
dans laquelle une ailette de rayonnement est prévue sur la surface circonférentielle extérieure du boîtier (11) qui est exposée à l'extérieur.

8. Machine électrique rotative (1) selon la revendication 1,
dans laquelle un trajet d'écoulement (18) du premier réfrigérant liquide (101) et une paroi de trajet d'écoulement (21) sont prévus sur une surface circonférentielle intérieure du cadre de refroidissement (17), et une gorge (100) pour monter un joint torique sur celui-ci est prévue sur une portion de bordure de la surface circonférentielle intérieure.

9. Machine électrique rotative (1) selon la revendication 1,
dans laquelle le cadre de refroidissement (17) est attaché à la surface circonférentielle extérieure du boîtier (11) à une position où la température est la plus élevée dans un état de non refroidissement.

10. Machine électrique rotative (1) selon la revendication 1,
dans laquelle la machine électrique rotative (1) est capable d'être utilisée à titre de machine électrique rotative du type à refroidissement à l'air en détachant le cadre de refroidissement (17).

11. Machine électrique rotative (1) selon la revendication 1,
dans laquelle l'intérieur du boîtier (11) est rempli avec un second réfrigérant liquide (100).

12. Machine électrique rotative (1) selon la revendication 11,
dans laquelle une partie du rotor (3) est immergée dans le second réfrigérant liquide (100).

13. Machine électrique rotative (1) selon la revendication 11 ou 12,
dans laquelle le cadre de refroidissement (17) est attaché sur la surface circonférentielle extérieure du boîtier (11) à une position adjacente à une portion qui n'est pas immergée dans le second réfrigérant liquide (100) à l'intérieur du boîtier (11).

14. Machine électrique rotative (1) selon l'une au moins des revendications 11 à 13,
dans laquelle une ailette de rayonnement est prévue sur la surface circonférentielle extérieure du boîtier (11) à une position adjacente à une portion qui est immergée dans le second réfrigérant liquide (100) à l'intérieur du boîtier (11).

15. Système de refroidissement d'une machine électrique rotative (1), comprenant :
la machine électrique rotative (1) selon la revendication 1 ; et
un dispositif de refroidissement qui refroidit la machine électrique rotative (1), dans lequel le dispositif de refroidissement inclut
un premier échangeur de chaleur (112) qui refroidit le premier réfrigérant liquide (101), et
une pompe (107) qui entraîne le premier réfrigérant liquide (101) en rotation entre le cadre de refroidissement (17) et le premier échangeur de chaleur (112).

16. Système de refroidissement d'une machine électrique rotative (1) selon la revendication 15,
dans lequel l'intérieur du boîtier (11) de la machine électrique rotative (1) est rempli avec un second réfrigérant liquide (100).

17. Système de refroidissement d'une machine électrique rotative (1) selon la revendication 16,
dans lequel le dispositif de refroidissement inclut une pompe (109) qui évacue par pompage le second réfrigérant liquide (100) vers l'extérieur du boîtier (11) et qui alimente le second réfrigérant (100) qui est évacué par pompage, jusque dans le boîtier (11).

18. Système de refroidissement d'une machine électrique rotative (1) selon la revendication 17,
dans lequel le dispositif de refroidissement inclut un second échangeur de chaleur (111) qui refroidit le second réfrigérant liquide (100) sur l'extérieur du boîtier (11).
